**Europäisches Patentamt**

(19) **European Patent Office**

**Office européen des brevets**

(11) Publication number: **0 097 307**
**A2**

(12) # EUROPEAN PATENT APPLICATION

(21) Application number: **83105805.2**

(22) Date of filing: **14.06.83**

(51) Int. Cl.³: **C 08 F 12/12**

(30) Priority: **21.06.82 US 390169**

(43) Date of publication of application:
**04.01.84 Bulletin 84/1**

(84) Designated Contracting States:
**BE DE FR GB IT NL**

(71) Applicant: **AMERICAN HOECHST CORPORATION**
**Route 202-206 North**
**Somerville, N.J. 08876(US)**

(72) Inventor: **Dana, David Eric**
**Beacon Hill Lighthouse Point 7430**
**Pittsburg Pennsylvania 15221(US)**

(72) Inventor: **Cooper, Richard Albert**
**Carlisle Road 105**
**Westford Massachusetts 01886(US)**

(74) Representative: **Meyer-Dulheuer, Karl-Hermann,**
**Dr. et al,**
**HOECHST Aktiengesellschaft Zentrale Patentabteilung**
**Postfach 80 03 20**
**D-6230 Frankfurt/Main 80(DE)**

(54) **Thermo-chemically cross-linked poly(p-methylstyrene) and process to obtain it.**

(57) According to the present invention there is provided a thermo-chemically cross-linked poly-(p-methylstyrene) having a Vicat softening temperature of at least 99°C. This composition is prepared by incorporating a high temperature initiator in the monomeric p-methylstyrene and polymerizing this, usually in the presence of a conventional polymerization initiator, to produce a cross-linkable poly(p-methylstyrene), which is then cured at elevated temperatures sufficient to activate the high temperature initiator and cross-link the polymer.

EP 0 097 307 A2

In U.S. Patent Spec. 4,230,836, there is disclosed monomeric methylstyrene consisting essentially of at least 90 % para-isomer, preferably at least 95 % para-isomer, and most preferably at least 97 % para-isomer, and being substantially devoid of ortho-isomer. Polymers of this monomer ("poly(p-methylstyrene)" or "PPMS") are also disclosed.

According to this letters patent, the patentee attempted to prepare a chemically cross-linked polymer of p-methylstyrene that would be an improvement over the previously known cross-linked polyvinyl toluene (see U.S. Patent Spec. 3,008,937) which consisted of a substantial portion of meta-isomer. The cross-linked polyvinyl toluene ("PVT") was said to have to low a glass transition temperature (Tg) to be used in rigid food and beverage containers that are subjected to thermal conditions.

In Example 3 of said letters patent, patentee prepared samples of cross-linked PPMS and PVT by dissolving the polymer in toluene, adding a peroxide initiator, casting a film of the polymer, drying under vacuum, and curing at $350^{\circ}$F $(177^{\circ}$C) for 0 to 3 minutes. The best glass transition temperatures obtained under these conditions were $53^{\circ}$C for cross-linked PVT and $72^{\circ}$C for cross-linked PPMS. The low Tg values were explained as due to the presence of oligomers and catalyst residues and further drying yielded polymers having Tg values of $85.8^{\circ}$C for PPMS and $67.8^{\circ}$C for PVT. The Tg value of the cross-linked PPMS, however, was still substantially below that of the polymer from which it was prepared ($111^{\circ}$C in Example 1) and such a polymer would have little commercial practability.

It was therefore an object of the invention to provide a thermo-chemically cross-linked poly(p-methylstyrene) having a higher Tg value and consequently a higher Vicat softening temperature than according to the prior art. A further object was to provide the respective processes to come to this product.

Accordingly the invention relates to a thermo-chemically cross-linked poly(p-methylstyrene) having a Vicat softening temperature of at least 99°C.

Further the invention is also directed to the processes of claims 3 to 11.

Throughout the specification and claims the terms p-methylstyrene ("PMS") and poly(p-methylstyrene) ("PPMS") are intended to define the monomer and polymer of the methyl styrene isomeric mixture disclosed in U.S. Patent Spec. 4,230,836, which is incorporated herein by reference. This isomeric mixture consists essentially of at least 90 % para-isomer, preferably at least 95 % para-isomer, and most preferably at least 97 % para-isomer.

According to the present invention cross-linked PPMS can be prepared thermo-chemically, the resulting product having a Vicat softening temperature of at least 99°C, preferably at least 100°C and up to about 115°C. In a especially preferred embodiment the Vicat softening temperature will be at least 105°C and up to 110°C. Vicat is measured according to ASTM D-1525.

The cross-linked PPMS compositions of the present invention may be prepared in an advantageous manner. PMS monomer, which has dissolved therein a high temperature initiator, is polymerized in the conventional manner to form a cross-linkable PPMS, which may then be cured at a time and/or temperature sufficient to activate the high temperature initiator and to cross-link the polymer without significant decomposition.

This method is advantageous in that a part can be molded from the cross-linkable polymer, then cured immediately thereafter. The curing can be accomplished within the mold, if desired, to achieve a one-step operation.

High temperature initiators useful in this method are those which have a ten hour half-life greater than 110°C. Typically these are di-cumyl peroxide, di-t-butyl peroxide, 2,5-dimethyl-2,5-bis(t-butylperoxy) hexane, and 3,3-di(t-butylperoxy) butyrate. Generally, the high temperature initiators are employed in amounts of from 0.5 to 2 %, preferably 0.8 to 1.5 %, by weight of PMS.

The polymerization may be conducted in any conventional manner and may be thermal or initiated and carried out in bulk, suspension, emulsion or solution. It is preferred to conduct the polymerization in suspension in the presence of a polymerization initiator which typically is a free-radical type peroxide initiator having a ten hour half-life below about $100^{\circ}C$, preferably from about $60^{\circ}$ to $100^{\circ}C$. Typical of these are benzoyl peroxide, t-butyl peroctoate, 2,5-dimethylhexane-2,5-diperoxy benzoate, and di-t-butyl diperoxy-azelate to name a few. Mixtures of initiators may also advantageously be used. Polymerization temperatures are generally in the range of about $75^{\circ}$ to about $130^{\circ}C$, preferably $90^{\circ}$ to $120^{\circ}C$. The resulting polymers generally have a molecular weight ($M_v$-viscosity average) of at least 30,000 preferably of at least 50,000, the normal range being between about 200,000 to 300,000.

After the polymerization, the polymer containing the high temperature initiator may then be cured, preferably after molding a shaped article from the polymer. Curing is generally accomplished at from about $175^{\circ}$ to $250^{\circ}C$ for about one to five minutes, preferably from about $200^{\circ}$ to $230^{\circ}C$ for about two to four minutes. Obviously, the time and temperature for curing are inversely related and are also dependent on the extent of cross-linking desired. The practitioner may readily select these parameters to optimize the desired results. However, caution should be exercised to avoid excessive curing times or temperatures or excessive quantities of high temperature initiator since it is believed that such excesses may cause oligomer formation, or other degradation products, and lower the Vicat temperature.

This invention may be described in greater detail by the following Example in which the parts and percentages are by weight.

Example

Into 10-ounce soft-drink bottles was charged 90 ml of suspending medium, 5 ml of aqueous ammonium persulfate solution (0.006 %) and 80 ml of PMS monomer solution. The suspending medium was composed of 1080 ml water, 5.44 g aqueous tricalcium phosphate slurry (33 %) and 0.060 g calcium hydroxide. The monomer solution contained 6.69 g of mixed polymerization initiators dissolved in 1000 ml p-methylstyrene. A high temperature initiator, the identity and quantity of which are shown in the Table, was then added to each bottle.

The bottles were blanketed with nitrogen, capped, and stored overnight in the refrigerator. They were then heated to 90°C while tumbling in an oil bath and held for 5 hours. The bath was then cooled to 60°C and the bottles removed and opened. To each bottle was added 5.0 ml of freshly prepared ammonium persulfate solution (0.006 %) and 0.015 g calcium hydroxide. The bottles wereblanketed with nitrogen, recapped and replaced in the oil bath. While tumbling the bottles, the temperature was raised to 120°C and held there for three hours. The bath was then cooled to room temperature and the bottles removed and opened. The solid contents were recovered, water-washed on a cheesecloth filter and dried.

Each polymer sample was then compression molded at 218°C for three minutes to simultaneously form a molded part and cross-link the polymer. The Vicat softening temperatures for each cross-linked PPMS part are shown in the Table.

Table

| Added to monomer | | Cured polymer | |
| --- | --- | --- | --- |
| Initiator (10-hr. 1/2-life | Quantity | Vicat ($^{o}$C) | Solubility* |
| 1. Di-t-butyl peroxide (126$^{o}$C) | 0.72 g (1.0 %) | 106 | insol.,sl.swollen |
| 2.            " | 1.10 g (1.5 %) | 102 | insol.,sl.swollen |
| 3. Di-cumyl peroxide (113$^{o}$C) | 0.72 g | 104 | |
| 4.            " | 1.10 g | 102 | insoluble |
| 5. 2,5-Dimethyl-2,5-bis (t-butylperoxy)hexane (119$^{o}$C) | 0.72 g | 104 | " |
| 6.            " | 1.10 g | 99 | insoluble |
| 7. None (control) | -- | | soluble |

* in methylene chloride

The cross-linked PPMS samples prepared according to this invention are considerable improvement over those prepared in U.S. Patent Spec. 4,230,836 (Example 3). In that Example the highest Tg attained was 86$^{o}$C (col. 12, l. 53). In contrast thereto, applicant's samples have Tg values which can be approximated at 94$^{o}$C to 101$^{o}$C. These values are arrived at by subtracting 5$^{o}$C from applicant's Vicat numbers, 5$^{o}$C being the average difference between Vicat and Tg for PPMS shown in Tables 1 and 2, col. 6 of U.S. Patent Spec. 4,230,836.

The shaped articles consisting of the cross-linked poly(p-methylstyrene) of the invention can be used for example as rigid food and beverage containers.

**0097307**
HOE 82/S 033

Claims:

1. A thermo-chemically cross-linkes poly(p-methylstyrene) having a Vicat softening temperature of at least 99°C.

2. The poly(p-methylstyrene) of claim 1 having a Vicat softening temperature of at least 105°C.

3. A process for preparing a composition according to claim 1, which comprises polymerizing p-methylstyrene, which has incorporated therein a high temperature initiator having a ten hour half-life greater than 110°C, and curing the resultant poly(p-methylstyrene) at a temperature and for a time sufficient to cross-link it without significant decomposition.

4. The process of claim 3, wherein the polymerization is conducted in the presence of a polymerization initiator.

5. The process of claim 3 and 4, wherein the high temperature initiator is present in an amount of from 0.5 to 2 % by weight of p-methylstyrene and the curing is performed at 175° to 250°C for 1 to 5 minutes.

6. The process of claim 3 to 5, wherein the high temperature initiator is present in an amount of from 0.8 to 1.5 % by weight of p-methylstyrene and the curing is performed at 190° to 230°C for 2 to 4 minutes.

7. The process of claim 3 to 6, wherein the polymerization initiator has a ten-hour half-life of 60° to 100°C and the polymerization is conducted in suspension at 90° to 120°C.

8. The process of claim 3 to 7, wherein the high temperature initiator is selected from di-cumyl peroxide, di-t-butyl peroxide, 2,5-dimethyl-2,5-bis-(t-butylperoxy) hexane, and etyhl 3,3,-di(t-butylperoxy) butyrate.

**0097307**
HOE 82/S 033

9. A process for making a thermo-chemically cross-linkable polymer of p-methylstyrene, which comprises polymerizing p-methylstyrene, which has incorporated therein a high temperature initiator having a ten-hour half-life greater than 110°C in an amount suitable to cross-link the resultant polymer.

10. The process of claim 9, wherein the polymerization is conducted in suspension in the presence of a polymerization initiator.

11. The process of claims 9 and 10, wherein the polymerization initiator is selected from benzoyl peroxide, t-butyl peroctoate, 2,5-dimethylhexane-2,5-diperoxybenzoate and mixtures thereof.